# EUROPEAN PATENT SPECIFICATION

(11) **EP 0 769 522 B1**
(45) Date of publication and mention of the grant of the patent: **05.02.2003**
(21) Application number: 96307597.3
(22) Date of filing: 18.10.1996
(51) Int. Cl.: C08K 5/16, C08K 13/02

(54) **Antistatic agent for polymer compositions**
Antistatisches Hilfsmittel für Polymerzusammensetzungen
Agent antistatique pour compositions polymèriques

(30) Priority: 19.10.1995 FR 9512298
(43) Date of publication of application: 23.04.1997
(73) Proprietor: GENERAL ELECTRIC COMPANY, Schenectady, NY 12345 (US)
(72) Inventor: Dumont, Jean-Marie G.L., 60140 Rosoy par Liancourt (FR)
(74) Representative: Szary, Anne Catherine, Dr.

(56) References cited:
- EP-A- 0 213 788
- US-A- 4 417 999
- US-A- 4 764 428

## Description

The present invention relates generally to polymer compositions comprising a solid antistatic agent.

In order to avoid the deposition of dust on articles moulded from polymer compositions, such as articles moulded from acrylonitrile-butadiene-styrene (ABS) resin, it is known to incorporate an antistatic agent or dust repellent into these compositions.

Ethoxylated C₁₃-C₁₅ amines have usually been used as antistatic agent in moulding compositions, in particular in those based on ABS resin. These ethoxylated amines are in liquid form.

The liquids are difficult to handle in industrial production. The liquid antistatic agent is generally injected during extrusion of the polymer composition close to the die, thereby entailing fire hazards.

Moreover, when the technique of stock mixtures is used, that is to say the technique consisting in producing a premix of the adjuvants with some of the resinous components of the polymer composition, the premix has a tendency to form agglomerates which stick to the walls of the feed and metering system during the formulation of the final composition on a twin-screw extruder.

Furthermore, the liquid antistatic agent is packaged in vats, and it is not possible to extract all of the content of the vat, leading to a loss of starting material and an increase in the manufacturing costs.

Finally, when such a liquid antistatic agent is used dispersed in a moulded plastic article, for example one based on ABS resin, the additive has a tendency to migrate towards the surface of the moulded article and to form a whitish sheet thereat, decreasing the brightness and the aesthetic appearance of this moulded article.

In order to overcome the drawbacks of liquid antistatic agents, it has been envisaged to use solid antistatic agents. Solid antistatic agents whose use has been envisaged are ethoxylated C₁₆-C₁₈ amines which are in pasty form. Another solid antistatic agent, commercially available under the tradename NOROPLAST® 831, consists of 75 parts by weight of ethoxylated C₁₆-C₁₈ amines and 25 parts by weight of calcium stearate.

However, these known solid antistatic agents also have the drawback of forming agglomerates when used in the stock mixture technique, in particular with ABS resins charged with pigments and dyes such as TiO₂. The formation of these brittle agglomerates greatly disrupts the supply and metering of the stock mixture during the formulation of the final composition on the twin-screw extruder.

The object of the present invention is thus to provide a novel polymer composition comprising a solid antistatic agent which avoids the formation of brittle agglomerates.

The present invention provides a polymer composition comprising 100 parts by weight of a polymer component selected from styrene polymers and alloys thereof, acrylic and methacrylic polymers and copolymers and alloys thereof, and vinyl polymers and copolymers and alloys thereof, and 0.1 to 10 parts by weight of a solid antistatic agent comprising:
(a) 40 to 90 % by weight of an ethoxylated C₁₅-C₂₀ amine, or of a mixture of ethoxylated C₁₅-C₂₀ amines; and
(b) 60 to 10 % by weight of a solidification agent chosen from the group consisting of magnesium oxide, zinc oxide, titanium dioxide, talc, ethylene bis-stearamide wax and mixtures thereof; with the proviso that the composition must contain at least 0.1 parts by weight of magnesium oxide.

The solid antistatic agent preferably comprises from 70 to 90 % by weight of an ethoxylated C₁₅-C₂₀ amine or of a mixture of the latter and 30 to 10 % by weight of the solidification component.

The recommended solidification components are magnesium oxide and ethylene bis-stearamide wax.

Ethoxylated C₁₅-C₂₀ amines are well known compounds and are commercially available from various companies, such as AKZO, ICI and CECA-ATOCHEM.

The present invention also relates to polymer compositions comprising, per 100 parts by weight of the polymer components, from 0.1 to 10 parts by weight of an antistatic agent according to the invention. The antistatic agent is preferably present at an amount of from 0.5 to 2.5 parts by weight relative to the weight of the polymer components of the composition.

Among the styrene polymers and copolymers which are useful in the compositions of the present invention, there may be mentioned styrene homopolymers, alkylstyrene homopolymers such as α-methylstyrene, high impact polystyrenes (HIPS) and grafted styrene polymers.

A recommended class of styrene polymers which are useful in the compositions of the present invention are the high impact polystyrenes (HIPS). These high impact polymers are generally prepared by polymerization by grafting of mixtures of styrene and possibly one or more additional copolymerizable vinyl monomers in the presence of a rubbery polymer trunk. It is also possible to prepare analogous resins by mixing a polymer of rigid matrix with a grafted rubbery trunk. Comonomers which may be useful in mixtures with styrene for the preparation of rigid styrene copolymers, as well as for use as grafting monomers, comprise monomers chosen from ethylstyrene, halostyrenes, vinylalkylbenzenes such as vinyltoluene, vinylxylene and butylstyrene, acrylonitrile, methacrylonitrile, lower alkyl esters of methacrylic acid, and mixtures thereof. In the high impact styrene resins, the rubbery polymer trunk normally constitutes from 5 to 80 %, preferably from 5 to 50 %, of the total weight of the grafted polymer, and comprises rubbery copolymers chosen from polybutadiene, polyisoprene, rubbery styrenediene copolymers, acrylic rubber, nitrile rubber and olefin rubbers, such as PDM and PR. In addition, other styrene polymers known in the art may be used in the alloy compositions of the invention.

As specific examples of grafted polymers which are useful in the compositions of the present invention, there may be mentioned resins of emulsion and bulk acrylonitrile/butadiene/styrene (ABS) polymer type, methyl methacrylate/butadiene/acrylonitrile/styrene (MABS) resins, resins of grafted styrene/butadiene (HIPS) polymer type and methyl methacrylate/butadiene/styrene (MBS) resins.

As specific examples of styrene polymers which may be used in the present invention, there may be mentioned polystyrene and styrene copolymers such as styrene/acrylonitrile (SAN) copolymers, styrene/methacrylic ester copolymers, resins of styrene/acrylonitrile/maleic anhydride (SAMA) terpolymer type, resins of styrene/maleic anhydride (SMA) copolymer type, similar polymers comprising substituted N-phenyl maleimides and which are substituted similarly or differently, and mixtures thereof. In addition, it is also possible to use styrene-butadiene-styrene (SBS) copolymers and synthetic butyl rubbers (SBR). Moreover, it is also possible to use analogous copolymer resins in which part of the styrene monomer component is replaced by other styrene monomers such as α-methylstyrene, halostyrenes or vinyltoluene. It is also possible to use mixtures or alloys of the above styrene polymers. Finally, it is also possible to use mixtures of the above styrene polymers and one or more polyphenylene ethers, polymers of polyvinyl chloride, polyamide and polycarbonate type, and other polymers known generally in the art for alloying with styrene polymers. These additional polymers are generally known in the art and are described in Modern Plastic Encyclopedia, 1986-1987, Mc Graw-Hill, Inc., New York, USA.

The styrene polymers which are useful in the present invention also comprise polymers with a core-shell structure. The styrene polymers are generally prepared by emulsion or bulk polymerization.

The styrene polymers particularly recommended for the compositions of the present invention are the ABS resins, in particular ABS resins containing from 4 to 70 % by weight of butadiene relative to the total weight of the resin, and alloys of ABS resins and styrene/acrylonitrile (SAN) copolymers. When the ABS resin is in powder form, it preferably contains 10 to 70 % by weight of butadiene. When the ABS resin is in granular form, it preferably contains 4 to 40 % by weight of butadiene and, even better, 4 to 30 % by weight.

The alloys particularly recommended for the compositions of the invention are the ABS/SAN alloys containing 10 to 80 parts by weight of ABS resin and 90 to 10 parts by weight of SAN copolymer. Preferably, the recommended resins for the compositions of the invention are ABS/SAN alloys containing 10 to 40 parts by weight of ABS resin and 90 to 40 parts by weight of SAN copolymer, most preferably 30 parts by weight of ABS resin and 70 parts by weight of SAN copolymer.

Among the acrylic and methacrylic polymers and copolymers which are useful in the present invention, there may be mentioned the copolymers of acrylic acid derivatives, for example of acrylic esters, with styrene, vinyl chloride, methacrylic acid derivatives and acetic acid esters, poly(alkyl methacrylates) such as poly(methyl methacrylate) and poly(alkyl acrylates).

Among the vinyl polymers and copolymers which may be mentioned are poly(vinyl chloride), poly(vinyl acetate), poly(vinylbenzenes), ethylene-vinyl acetate copolymers and polyvinyl alcohols.

The compositions according to the invention may also contain adjuvants generally used in polyolefin compositions and styrene polymers, such as lubricants, pigments, dyes, UV stabilizers, antioxidants, flame retardants and extending and/or reinforcing fillers.

Among the lubricants which may be used in the compositions of the present invention, there may be mentioned, by way of example, magnesium stearate, zinc stearate, polyethylene wax, paraffin wax, wax from ethylene oxide and propylene oxide, butyl stearate, glyceryl monostearate, barium stearate, sodium stearate, steryl alcohol and octyl behenate.

Among the inorganic fillers which may be used in the compositions of the present invention, there may be mentioned talc, barium sulphate, calcium carbonate, magnesium hydroxycarbonate and aluminium.

The flame retardants which may be used in the compositions of the present invention are any flame retardant or mixture of flame retardants known to impart a flame-retardant nature to compositions based on polyolefins or on styrene polymers. Among the flame retardants which may be mentioned are flame-retardant organic compounds such as tetrabromobisphenol, bis(tribromophenoxy)ethane, poly(bromodiphenyl ether), polybromophenole, poly(bromophenyl alkyl ethers), poly(bromobenzyl acrylate) or polyacrylate, polybromocyclododecane, polybromostyrene, polybromophenylmaleimide, bromoepoxy monomers or polymers, and copolycarbonates derived from a substituted halodiphenol and a diphenol, the halogen preferably being chlorine or bromine.

Preferably, also, the organohalo flame retardant is used in combination with a synergistic compound such as an antimony compound, for example antimony oxide.

The compositions of the present invention may also contain dyes and pigments, for example titanium oxide, ultramarine blue or'carbon black.

When the antistatic agent used in the compositions of the invention contains no magnesium oxide, it is necessary to add magnesium oxide to the composition according to the invention. In this case, the aim of the magnesium oxide is to remove the residual traces of acid and thus to avoid corrosion of the moulds during moulding of the compositions. It is recommended in this case to use an amount of from 0.1 to 0.15 parts by weight of magnesium oxide per 100 parts of polymer components in the composition. Obviously, when an antistatic agent according to the invention which already contains magnesium oxide is used, it is not necessary to add more of it into the compositions unless it contains an amount of less than 0.10 part.

The examples which follow are intended to illustrate the invention. In the examples, except where otherwise mentioned, all the percentages and parts are expressed by weight.

### Comparative Example A and Examples 1 to 3.

In Examples 1 and 2, antistatic agents according to the invention were prepared by mixing together the constituents mentioned in Table 1 below. A commercial antistatic additive, NOROPLAST 831® is also mentioned in Table 1.

The physical properties of these antistatic additives are also mentioned in Table 1.

**TABLE 1**

| Example No. | A | 1 | 2 | 3* |
|---|---|---|---|---|
| **Composition** | | | | |
| - Ethoxylated C₁₆-C₁₈ amines | 75 | 87 | 70 | 82 |
| - Calcium stearate | 25 | - | - | - |
| - MgO | - | 13 | 30 | - |
| - Ethylene bis-stearamide wax | - | - | - | 18 |

| **Physical properties** | | | | |
|---|---|---|---|---|
| Melting point °C (differential scanning calorimetry) | 44 | 49 | 47 | 49 |
| Humidity (Karl-Fisher) % | 1.45 | 1.15 | 0.8 | 1 |
| Thermogravimetric analysis (volatility) °C Weight loss: | | | | |
| -1 % | 90 | 125 | - | - |
| -2 % | 125 | 200 | - | - |
| -3 % | 200 | 225 | - | - |
| -5 % | 230 | 250 | - | - |
| Form | White flakes | Yellowish flakes | - | - |
| Flowability | Reference | +¹ | + | NT² |

| | | | | |
|---|---|---|---|---|
| 1: superior | | | | |
| 2: not tested | | | | |
| * comparative | | | | |

Table 1 shows that the antistatic additives according to the invention, of Examples 1 and 2, have better physical properties than "A", the commercial antistatic agent NOROPLAST® 831. In particular, they have a markedly higher melting point, less residual humidity, and, for the antistatic additives of Examples 1 and 2, better flowability.

### Comparative Examples B and C and Examples 4 and 5.

Stock mixtures were prepared by mixing together the ingredients shown in Table 2, in a Henschel mixer having a rotor spinning at a speed of 730 rpm. The mixing time was 3 minutes and the ingredients were charged in the following order: half of the grafted ABS resin was introduced first, then the titanium oxide, the ultramarine blue 51, the antistatic agent, optionally followed by the magnesium oxide, and finally the remainder of the grafted ABS resin, were introduced in order. The grafted ABS resin used was a resin marketed by the company General Electric Plastics ABS S.A., G350, having the following composition: styrene 37.5 % by weight, butadiene 50 % by weight, acrylonitrile 12.5 % by weight.

The temperature in the mixer while the ingredients were being mixed together to obtain the stock mixtures was 60°C.

The compositions of the various stock mixtures obtained as indicated above are collated in Table 2.

The appearance of the stock mixtures obtained and the oven caking temperature for the various antistatic agents are indicated in Table 3.

The oven caking test is performed as follows:

A 3 cm layer of antistatic agent is placed in a crystallizing dish 11 cm in diameter. A moulded ABS disc 10 cm in diameter is then placed on this layer and a metal weight of 700 g is placed on top of this disc. The assembly is then placed in a ventilated oven at a determined temperature for 4 hours. After cooling for 15 minutes, the ABS disc is examined to see if flakes or grains of powder have adhered thereto, and if there are any agglomerates of flakes. Tests were performed at four different oven temperatures; 35, 40, 45 and 50°C. The temperature adopted is that for which no agglomerates of flakes were observed.

This oven caking test is an indication of the aptitude of the antistatic agent to form agglomerates during storage of a pallet of sacks containing the antistatic agent, during a hot spell in summer. Consequently, the higher the caking temperature of the antistatic agent, the lower is the risk of formation of agglomerates during the manufacture of the stock mixtures.

**TABLE 2**

| Example No. | Grafted resin ABS | TiO₂ | Ultramarine blue 51 | Antistatic agent | | MgO |
|---|---|---|---|---|---|---|
| | (kg) | (kg) | (kg) | Noroplast® 831 | Ex. 1 | (kg) |
| | | | | (kg) | (kg) | |
| Comparative B | 422 | 209 | 1.18 | 24.964 | - | 3.121 |
| Comparative C | 422 | 209 | 1.18 | 71.771 | - | 3.121 |
| Example 4 | 422 | 209 | 1.18 | - | 24.264 | - |
| Example 5 | 422 | 209 | 1.18 | - | 71.771 | - |

**TABLE 3**

| | Comparative Ex. B | Comparative Ex. C | Ex. 3 | Ex. 4 |
|---|---|---|---|---|
| Appearance of the stock mixture | agglomerates 20 to 50 mm in diameter | agglomerates 20 to 50 mm in diameter | no agglomerates | no agglomerates |
| | Noroplast 831® | Ex 1 | | |
| Oven caking temperature °C | 40 | 50 | | |

### Comparative Example D and Examples 5 to 7.

Compositions according to the invention and a comparative composition were manufactured by mixing together the ingredients as mentioned in Table 4. The physical properties of these compositions are also mentioned in Table 5.

Table 5 shows that the compositions according to the invention have similar, if not better, properties than the compositions of the prior art containing a commercial solid antistatic additive (NOROPLAST® 831).

**TABLE 4**

| Composition (parts by weight) | | | | | | | | | |
|---|---|---|---|---|---|---|---|---|---|
| Ex. No. | Resin ABS¹ | Resin SAN² | Internal lubricant³ | Antistatic agent | | | | MgO | Carbon black |
| | | | | Noroplast 831® | Ex. 1 | Ex. 2 | Ex. 3 | | |
| Comp. D | 30 | 70 | 1.3 | 0.8 | - | - | - | 0.1 | 1 |
| Ex. 5 | 30 | 70 | 1.3 | - | 0.8 | - | - | - | 1 |
| Ex. 6 | 30 | 70 | 1.3 | - | - | 0.8 | - | - | 1 |
| Ex. 7 | 30 | 70 | 1.3 | - | - | - | 0.8 | 0.1 | 1 |

| | | | | | | | | | |
|---|---|---|---|---|---|---|---|---|---|
| 1. ABS G 350 resin (General Electric Plastics ABS S.A.) 37.6 % styrene/50 % butadiene/12.5 % acrylonitrile. | | | | | | | | | |
| 2. SAN-S 2856 resin - 28 % acrylonitrile/72 % styrene. | | | | | | | | | |
| 3. Ethylene bis-stearamide wax. | | | | | | | | | |

**TABLE 5**

| Physical properties | | | | |
|---|---|---|---|---|
| | Comparative Ex. D | Example 5 | Example 6 | Example 7 |
| Melt index (220°C/10 kg) g/10 minutes | 26.1 | 24 | 21.5 | 24 |
| | | | | |
| Capillary rheometer (230°C/1000 s⁻¹) Pa s | 227 | 227 | 235 | 228 |
| | | | | |
| Izod impact strength kJ/m² (1A - 23°C) | 13 | 12.2 | 12.1 | 13.2 |
| | | | | |
| VICAT B120 softening point °C | 101 | 102 | 102.5 | 101.5 |
| | | | | |
| Brightness: | | | | |
| at 20° | 54.5 | 55.5 | 54 | 54 |
| at 60° | 89 | 90 | 91 | 89.5 |
| Sheet | 204 | 200 | 215 | 216 |

## Claims

1. A polymer composition comprising 100 parts by weight of a polymer component selected from styrene polymers and alloys thereof, acrylic and methacrylic polymers and copolymers and alloys thereof, and vinyl polymers and copolymers and alloys thereof, and 0.1 to 10 parts by weight of a solid antistatic agent comprising:
(a) 40 to 90 % by weight of an ethoxylated C₁₅-C₂₀ amine, or of a mixture of ethoxylated C₁₅-C₂₀ amines; and
(b) 60 to 10 % by weight of a solidification agent chosen from the group consisting of magnesium oxide, zinc oxide, titanium dioxide, talc, ethylene bis-stearamide wax and mixtures thereof; with the proviso that the composition must contain at least 0.1 parts by weight of magnesium oxide.

2. A composition according to claim 1, wherein the solid antistatic agent comprises 70 to 90 % by weight of the component (a) and 30 to 10 % by weight of the component (b).

3. A composition according to claim 1 or 2, wherein component (b) is magnesium oxide and/or ethylene bis-stearamide wax.

4. A composition according to any one of claims 1 to 3, wherein component (a) is an ethoxylated C₁₆-C₁₈ amine or mixture of ethoxylated C₁₆-C₁₈ amines.

5. A composition according to claim 4, wherein the polymer component comprises an ABS resin containing from 4 to 70 % by weight of butadiene relative to the total weight of the ABS resin.

6. A composition according to claim 5, wherein the polymer component comprises 10 to 80 parts by weight of a grafted ABS resin and 90 to 10 parts by weight of SAN resin.

## Patentansprüche

1. Polymer-Zusammensetzung, umfassend 100 Gewichtsteile einer Polymer-Komponente, ausgewählt aus Styrolpolymeren und deren Legierungen, Acryl- und Methacryl-Polymeren und deren Copolymeren und Legierungen und Vinylpolymeren und Copolymeren und Legierungen davon, und 0,1 bis 10 Gewichtsteilen eines festen antistatischen Mittels, umfassend:
(a) 40 bis 90 Gew.-% eines ethoxylierten C₁₅-C₂₀-Amins oder einer Mischung ethoxylierter C₁₅-C₂₀-Amine und
(b) 60 bis 10 Gew.-% eines Verfestigungsmittels, ausgewählt aus der Gruppe bestehend aus Magnesiumoxid, Zinkoxid, Titandioxid, Talk, Ethylenbisstearamid-Wachs und deren Mischungen, unter der Bedingung, dass die Zusammensetzung mindestens 0,1 Gewichtsteil Magnesiumoxid enthalten muss.

2. Zusammensetzung nach Anspruch 1, worin das feste antistatische Mittel 70 bis 90 Gew-% der Komponente (a) und 30 bis 10 Gew.-% der Komponente (b) umfasst.

3. Zusammensetzung nach Anspruch 1 oder 2, worin Komponente (b) Magnesiumoxid und/oder Ethylenbisstearamid-Wachs ist.

4. Zusammensetzung nach einem der Ansprüche 1 bis 3, worin Komponente (a) ein ethoxyliertes C₁₆-C₁₈-Amin oder eine Mischung ethoxylierter C₁₆-C₁₈-Amine ist.

5. Zusammensetzung nach Anspruch 4, worin die Polymer-Komponente ein ABS-Harz umfasst, das von 4 bis 70 Gew.-% Butadien, mit Bezug auf das Gesamgewicht des ABS-Harzes, enthält.

6. Zusammensetzung nach Anspruch 5, worin die Polymer-Komponente 10 bis 80 Gewichtsteile eines gepfropften ABS-Harzes und 90 bis 10 Gewichtsteile SAN-Harz umfasst.

## Revendications

1. Composition de polymère, qui contient 100 parties en poids d'un composant polymère choisi parmi les polymères styréniques et leurs alliages, les polymères et copolymères acryliques ou méthacryliques et leurs alliages, et les polymères et copolymères vinyliques et leurs alliages, et de 0,1 à 10 parties en poids d'un agent antistatique solide qui est constitué de :
a) 40 à 90 % en poids d'une amine en C₁₅₋₂₀ éthoxylée ou d'un mélange d'amines en C₁₅₋₂₀ éthoxylées ;
b) et 60 à 10 % en poids d'un agent de solidification choisi dans l'ensemble que forment l'oxyde de magnésium, l'oxyde de zinc, le dioxyde de titane, le talc, la cire d'éthylène-bis(stéaramide) et leurs mélanges ;
sous réserve que la composition contienne au moins 0,1 partie en poids d'oxyde de magnésium.

2. Composition conforme à la revendication 1, dans laquelle l'agent antistatique solide est constitué de 70 à 90 % en poids de composant (a) et de 30 à 10 % en poids de composant (b).

3. Composition conforme à la revendication 1 ou 2, dans laquelle le composant (b) est de l'oxyde de magnésium et/ou de la cire d'éthylène-bis(stéaramide).

4. Composition conforme à l'une des revendications 1 à 3, dans laquelle le composant (a) est une amine en C₁₆₋₁₈ éthoxylée ou un mélange d'amines en C₁₆₋₁₈ éthoxylées.

5. Composition conforme à la revendication 4, dans laquelle le composant polymère comporte une résine ABS qui est constituée de butadiène pour 4 à 70 % de son poids total.

6. Composition conforme à la revendication 5, dans laquelle le composant polymère comporte 10 à 80 parties en poids d'une résine ABS greffée et 90 à 10 parties en poids d'une résine SAN.
